(19) Europäisches Patentamt
European Patent Office
Office européen des brevets

(11) **EP 2 858 739 B1**

## (12) EUROPEAN PATENT SPECIFICATION

(45) Date of publication and mention of the grant of the patent:
**28.11.2018   Bulletin 2018/48**

(21) Application number: **13732808.4**

(22) Date of filing: **07.06.2013**

(51) Int Cl.:
*B01D 69/12* [(2006.01)]      *B01D 71/58* [(2006.01)]
*B01D 71/72* [(2006.01)]

(86) International application number:
**PCT/CZ2013/000073**

(87) International publication number:
**WO 2013/185739 (19.12.2013 Gazette 2013/51)**

(54) **COMPOSITE MEMBRANES FOR SEPARATION OF GAS MIXTURES AND A METHOD OF PREPARATION THEREOF**

VERBUNDSTOFFMEMBRANE ZUR TRENNUNG VON GASGEMISCHEN UND VERFAHREN ZUR HERSTELLUNG DAVON

MEMBRANES COMPOSITES POUR LA SÉPARATION DE MÉLANGES GAZEUX ET PROCÉDÉ DE PRÉAPRATION DE CELLES-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **11.06.2012   CZ 20120389**

(43) Date of publication of application:
**15.04.2015   Bulletin 2015/16**

(73) Proprietor: **Ustav Makromolekularni Chemie AV CR, v.v.i.**
**162 06 Praha 6 (CZ)**

(72) Inventors:
 • **BROZOVA, Libuse**
   **162 00 Praha 6 - Veleslavin (CZ)**
 • **TOMSIK, Elena**
   **165 00 Praha 6 - Lysolaje (CZ)**
 • **ZITKA, Jan**
   **273 43 Bustehrad (CZ)**

(74) Representative: **Hartvichova, Katerina et al**
**Harber IP s.r.o.**
**Na belidle 64/3**
**150 00 Praha 5 (CZ)**

(56) References cited:
**EP-A1- 0 979 672     WO-A1-93/01229**
**WO-A2-95/02251     US-A- 5 045 357**

 • BLINOVA N V ET AL: "Effect of reaction conditions on film morphology of polyaniline composite membranes for gas separation", JOURNAL OF POLYMER SCIENCE, PART A: POLYMER CHEMISTRY 20120801 JOHN WILEY AND SONS INC. USA, vol. 50, no. 15, 1 August 2012 (2012-08-01), pages 3077-3085, XP002710443, DOI: 10.1002/POLA.26093
 • ANDREEVA D V ET AL: "Effect of polymerization conditions of pyrrole on formation, structure and properties of high gas separation thin polypyrrole films", THIN SOLID FILMS, ELSEVIER-SEQUOIA S.A. LAUSANNE, CH, vol. 406, no. 1-2, 1 March 2002 (2002-03-01), pages 54-63, XP004351292, ISSN: 0040-6090, DOI: 10.1016/S0040-6090(01)01719-9 cited in the application
 • ORLOV A V ET AL: "Structure and gas separation properties of composite films based on polyaniline", JOURNAL OF APPLIED POLYMER SCIENCE 20030801 JOHN WILEY AND SONS INC. US, vol. 89, no. 5, 1 August 2003 (2003-08-01) , pages 1379-1384, XP002710444, DOI: 10.1002/APP.12418

- **ELYASHEVICH G K ET AL: "The effect of a polypyrrole coating on the thermal stability of microporous polyethylene membranes", EUROPEAN POLYMER JOURNAL, PERGAMON PRESS LTD. OXFORD, GB, vol. 39, no. 4, 1 April 2003 (2003-04-01), pages 647-654, XP004408989, ISSN: 0014-3057, DOI: 10.1016/S0014-3057(02)00282-3 cited in the application**

**Description**

Field of Art

The invention relates to composite membranes for separation of gas mixtures having a separation layer of conjugated polymers and to a method of their preparation. The membranes are essential components in separation technologies for the separation of gas mixtures.

Background Art

At present, the interest in using membrane technologies for separation of gas mixtures is growing. Membrane systems for gas separation are pressure-controlled processes which find applications mainly in the field of separation of oxygen and nitrogen from air, separation of hydrogen in ammonia production, in purification of natural gas from water, nitrogen, carbon dioxide and other undesirable admixtures, in separation of organic vapours from gases, separation of helium from natural gas, etc. In contrast to commonly used separations, such as absorption/adsorption processes, cryogenic distillation etc., there are no phase transitions in membrane separations and the processes require less energy and are simpler in operation.

The requirements for gas separation membranes are as follows:
High membrane permeability - defined as the volume of permeate passing through a unit area of the membrane per time unit (e.g., $m^3$ $m^{-2}$ $h^{-1}$) - serves for comparison of performance of individual membrane types.

High selectivity of the chosen gas pairs - a high flux of one component of gas mixture through membrane while retaining the other components.

From the materials viewpoint, the membranes for gas separation can be divided into two groups: organic (polymer) membranes - natural polymers (cellulose and its derivatives) and synthetic polymers (poly(2,6-dimethyl-1,4-phenylene oxide), poly(vinylidene fluoride), poly(dimethylsiloxane), poly(4-methylpent-1-ene), polyimides, polysulfones, polycarbonates, etc.) - and inorganic membranes - ceramics (silicate materials - carbides, zeolites, zirconium, titanium and aluminium oxides).

From the morphological point of view the membranes for gas separation can be divided into porous (symmetric - with homogenous porous structure, asymmetric - their porosity is decreasing when going from one side of the membrane to the other, where a thin nonporous separation layer is formed), nonporous (homogenous) and composite membranes - composed of more layers, wherein each fulfils a different function. It is the support that imparts good mechanical properties to the membrane, a thin separation layer and a protective layer. At present predominantly eight to nine kinds of polymers are used for gas separation; their transport properties are shown in Table 1.

The key parameters for evaluation of polymer membranes for two-gas mixtures are the dependence of permeability of the faster-passing component and the separation factors of both components. Separation potentials of materials are limited by the permeability - selectivity relation. Generally it holds true that permeability decreases with increasing separation factor and *vice versa.* On the basis of a high number of measurements, Lloyd M. Robeson constructed diagrams of dependences of permeability and ideal separation coefficients of polymer materials for most interesting gas pairs in industry ($O_2/N_2$, $CO_2/CH_4$, $H_2/N_2$, $He/N_2$, $H_2/CH_4$, $He/CH_4$, $He/H_2$, $H_2/CO_2$ a $He/CO_2$) where empirical upper limits for gas separation are depicted. (Robeson, L.M. The upper bound revisited. Journal of Membrane Science 2008. 320: p. 390-400). One of the possibilities of shifting permeabilities and selectivities to higher values and thus increasing the effectivity of polymer membranes is preparation of new materials. The other possibility is composite membranes where on a permeable support, which imparts good mechanical properties to the composite membrane, a very thin separation layer with high selectivity for the chosen gas pair is applied.

Table 1 Transport properties of polymers used for membrane gas separation in industry

| Polymer | Permeability (barrers)* at 30°C | | | | | Selectivity | | | | | |
|---|---|---|---|---|---|---|---|---|---|---|---|
| | $H_2$ | $N_2$ | $O_2$ | $CH_4$ | $CO_2$ | $H_2/N_2$ | $H_2/CH_4$ | $O_2/N_2$ | $H_2/CO_2$ | $CO_2/CH_4$ | $N_2/CH_4$ |
| Cellulose acetate | 2.63 | 0.21 | 0.59 | 0.21 | 6.3 | 12.52 | 12.52 | 2.81 | 0.42 | 30.00 | 1.00 |
| Ethylcellulose | 87 | 8.4 | 26.5 | 19 | 26.5 | 10.36 | 4.58 | 3.15 | 3.28 | 1.39 | 0.44 |
| Brominated polycarbonate | - | 0.18 | 1.36 | 0.13 | 4.23 | - | - | 7.56 | - | 32.54 | 1.38 |
| Poly(dimethylsiloxane) | 550 | 250 | 500 | 800 | 2700 | 2.20 | 0.69 | 2.00 | 0.20 | 3.38 | 0.31 |
| Polyimide (Matrimide) | 28.1 | 0.32 | 2.13 | 0.25 | 10.7 | 87.81 | 112.40 | 6.66 | 2.63 | 42.80 | 1.28 |
| Poly(methylpentene) | 125 | 6.7 | 27 | 14.9 | 84.6 | 18.66 | 8.39 | 4.03 | 1.48 | 5.68 | 0.45 |
| Poly(phenylene oxide) | 113 | 3.81 | 16.8 | 11 | 75.8 | 29.66 | 10.27 | 4.41 | 1.49 | 6.89 | 0.35 |
| Polysulfone | 14 | 0.25 | 1.4 | 0.25 | 5.6 | 56.00 | 56.00 | 5.60 | 2.50 | 22.40 | 1.00 |

Conjugated polymers of the polyaniline (PANI) type or polypyrrole (PPy) type and their derivatives appear to be perspective materials for separation of gases. A drawback of these polymers is their poor mechanical properties which do not permit the preparation of quality thin polymer films. Hence self-supporting membranes can be obtained from the polymers only with big problems. Although these membranes show excellent separation properties, especially for the $O_2/N_2$ pair, their permeabilities are very low, unsuitable for practical applications.

Many scientific articles and patents have been published on the utilization of conjugated polymers in gas separation, various types of membranes and methods of their preparation have been described.

The membranes can be divided into four basic groups:

(a) composite membranes with separation layer of conjugated polymers on a porous support,
(b) composite membranes with separation layer of conjugated polymers on a compact support,
(c) self-supporting compact films of conjugated polymers prepared by solution or dispersion casting and
(d) self-supporting asymmetric membranes prepared from solutions of conjugated polymers.

Ad (a)

Preparation of a separation layer of a conjugated polymer on a porous support is described in US Patent 5 045 357. Deposition of polypyrrole film on a porous ceramic or glass support with average pore size 100 A is described. According to the patent, the deposition of $\pi$-conjugated conductive polymer was carried out by chemical oxidative polymerization in acetonitrile. A composite membrane was formed in which not all pores of the support were completely covered with a polypyrrole layer. The thus formed composite membranes showed low separation coefficients.

Gupta (Gupta, Y., K. Hellgardt, and R.J. Wakeman, Enhanced permeability of polyaniline based nano-membranes for gas separation. Journal of Membrane Science, 2006. 282(1-2): p. 60-70) describes the preparation of thin separation layers from a polyaniline solution by casting. After drying, the layer is overcast with a solution of poly(vinylidene fluoride) (PVDF) which, after solvent evaporation, forms a microporous support. The thus formed composite membrane of the separation layer thickness of 0.6 mm showed an ideal separation coefficient for the gas pair $O_2/N_2$ -5.8. Elyashevich (Elyashevich, G.K., et al., The effect of a polypyrrole coating on thermal stability of microporous polyethylene membranes. European Polymer Journal, 2003. 39(4): p. 647-654) prepared a composite membrane based on polypyrrole and microporous polyethylene. Polypyrrole was applied on both sides of the support so that it was first submerged into a solution of an oxidation agent and then exposed to monomer vapours. This method does not guarantee the formation of a defect-free compact separation layer.

Ad (b)

Another possibility of preparing composite membranes for gas separation is the application of conjugated polymers onto compact supports. The use of compact supports overcomes the problems of porous supports, when perfect covering of all pores was not achieved. Andreeva (Andreeva, D.V., et al., Effect of polymerization conditions of pyrrole on formation, structure and properties of high gas separation thin polypyrrole films. Thin Solid Films, 2002. 406(1-2): p. 54-63) describes two methods of preparation of composite membranes based on sulfonated poly(phenylene oxide) (SPPO) and polypyrrole. In the first method the SPPO support was submerged into an oxidation agent solution and then exposed to monomer vapours; in the other method the support was exposed to monomer vapours and then submerged into a solution of oxidation agent. The highest achieved separation coefficient of these membranes for the gas pair $O_2/N_2$ was 8.1. These membranes did not exhibit long-term stability.

Another possibility of preparation of selective conductive films for gas separation is the oxidative phase-boundary polymerization of aniline on poly(trimethylvinylsilane) support. (Orlov, A.V., S.G. Kiseleva, and G.P. Karpacheva, Borderline polymerization of aniline: Interpretation in the context of the electrical double layer model. Polymer Science - Series A, 2008, 50(10): p. 1021-1027). The authors describe the deposition of a polyaniline layer on a support by the method of phase-boundary polymerization where the poly(trimethylvinylsilane) film as a support was placed on the surface of a polymerization mixture of monomer solution and oxidation agent. Using the method a polyaniline film of 0.1 $\mu$m thickness was made. The highest achieved selectivity for the $O_2/N_2$ gas pair was 8.2.

Ad (c)

Many methods of preparation of self-supporting thin films of conjugated polymers were described. Due to the poor mechanical properties of conjugated polymers the methods are mostly very complex.

Anderson (Anderson, M.R., et al., Conjugated polymer films for gas separations. Science, 1991, 252(5011): p. 1412-1415) describes the preparation of a self-supporting polyaniline film by solution casting. A drawback of this method is the preparation of polyaniline which is further dissolved in an appropriate solvent. It is well known that the formed polyaniline precipitates in the polymerization mixture (MacDiarmid, A.G. and A.J. Epstein, Polyanilines - a Novel Class of Conducting Polymers. Faraday Discussions, 1989, 88: p. 317). The solubility of the precipitated polyaniline depends on the method of polymer preparation, on the monomer nature, its substitution, acidity of aqueous media, oxidation reagents, temperature, etc. Nevertheless, it is not possible to prepare polyaniline solutions of high concentrations. Kaner and his coworkers prepared a polyaniline solution of concentrations ranging from 5 to 30 mass %. The cast films showed a good selectivity but a very low permeability. (Anderson, M.R., et al., Conjugated polymer films for gas separations. Science, 1991, 252(5011): p. 1412-1415).

Lee and his coworkers also prepared films from a polymer solution in 1,3-dimethyl-3,4,5,6-tetrahydropyrimidin-2(1*H*)-one (Lee,Y.M., et al., Gas separation through conductive polymer membranes. 2. Polyaniline membranes with high oxygen selectivity. Industrial and Engineering Chemistry Research, 1999, 38(5): p. 1917-1924). In this way a polyaniline film of the thickness of 5 $\mu$m was prepared. The permeability of the reprotonated membrane was 0.1 barrer ($O_2$) and the selectivity $O_2/N_2$ was 28. By lowering the thickness of the prepared polyaniline film, better permeabilities should be achieved but, on the other hand, selectivities are lower due to the formation of small defects (Kuwabata, S. and C.R. Martin, Investigation of the gas-transport properties of polyaniline. Journal of Membrane Science, 1994, 91(1-2): p. 1-12).

A detailed description of the preparation of self-supporting polyaniline film is given in the published international patent application WO 92/03217. Polyaniline was prepared by polymerization and then dissolved in several solvents. A polyaniline film was cast from the solution, the gas separation properties of the film were improved by deprotonation and reprotonation using chemical and electrochemical methods. The subject of the patent is the preparation of self-supporting films of conjugated polymers for gas separation. To be sufficiently mechanically stable and resistant to high pressures, the self-supporting films must be relatively thick, which leads to very low gas fluxes.

U.S. Patent 5,358,556 describes the preparation of compact polymer membranes for gas separation. The membrane was prepared by solution casting. The self-supporting film was further de- and reprotonated to achieve higher selectivities. The claims are aimed at selectivity for the gas pair $O_2/N_2$, which amounts to 32. Nevertheless, the permeability of such membrane is very low, which precludes its utilization in industry.

In a further work the preparation of polyaniline base with a higher solubility is described. For the polymerization, alkyl-substituted aniline was used. (Chang, M.J., A.S. Myerson, and T.K. Kwei, Gas transport in ring-substituted polyanilines. Polymer Engineering and Science, 1997, 37(5): p. 868-875). Chang et al. showed that gas permeability increases with the substituent size due to enhanced diffusivity but the selectivity for the gas pair $O_2/N_2$ slightly decreases (6.33-5.79).

Rebattet and coworkers published the results of preparation of a self-supporting film from a solution of polyaniline base (Rebattet, L., et al., Effect of doping treatment on gas transport properties and on separation factors of polyaniline membranes. Journal of Applied Polymer Science, 1995, 57(13): p. 1595-1604). It is very difficult to prepare a defect-free self-supporting film. In this work a polyaniline membrane of thickness 10-15 $\mu$m was prepared and then repeatedly de- and reprotonated. The highest obtained selectivity for the $O_2/N_2$ gas pair was 14 and the permeability of $O_2$ was 0.142 barrer.

Gupta and coworkers showed that it is possible to prepare a self-supporting polyaniline film of thickness 2-6 $\mu$m but its separation coefficient for the $O_2/N_2$ gas pair is 7.1 (Gupta, Y., K. Hellgardt, and R.J. Wakeman, Enhanced permeability of polyaniline-based nanomembranes for gas separation. Journal of Membrane Science, 2006, 282(1-2): p. 60-70).

Ad (d)

Due to very low gas fluxes through the separation layers of conjugated polymers, an effort was put to prepare an asymmetric membrane from conjugated polymers, which is characterized by porous structure with a thin compact layer on one of the surfaces.

The subject of U.S. Patent Application 2003/0162939 is the preparation of a selective membrane from a solution of polyaniline base. A polyaniline solution was used for preparation of a robust, stable polyaniline membrane. The authors prepared a solution of emeraldine base, the solution was poured on the underlay and the thus formed membrane submerged into a solution of polyaniline precipitant. In this way an asymmetric membrane was formed with a thin compact layer the thickness of which was lower than 1 $\mu$m. However, mechanical properties of the prepared membranes were limiting in this case.

U.S. Patent 7,563,484 B2 describes the preparation of an asymmetric hollow fibre for gas separation with a thin separation layer (skin). The fibres were prepared from a solution of emeraldine base. In comparison with U.S. Patent Application 2003/0162939 A1, the author also showed that the hollow fibres prepared according to the invention lost, in the course of time, their ability to separate gases.

Application of conductive polymer layers is also utilized in membrane applications other than gas separation.

U.S. Patent 6,465,120 B1 describes the preparation of a composite polymer membrane based on polyaniline and a perfluorosulfonic acid polymer. The invention shows the aniline deposition in a polymer that contains acid groups depends on the acid concentration in polymer membrane. The subject of invention is composite membranes and their utilization as a solid polymer electrolyte.

U.S. Patent 5,089,294 also describes the method of application of a polypyrrole film to a nonconductive substrate so that a chemiresistor can be prepared. Deposition of thin polypyrrole films onto the substrate and their subsequent testing as hydrazine or ammonia sensor is described.

Potasov (Potasov, K.V. et al., Composite sulfonated cation-exchange membranes modified with polyaniline and applied to salt solution concentration by electrodialysis. Russian Journal of Electrochemistry, 2010, 46(10): p.1131-40) described a method of preparation of heterogeneous and homogeneous cationic membranes with incorporated polyaniline for the purpose of enhancing membrane conductivity. Cationic membranes were transformed into the $H^+$ form and subsequently submerged into a solution of the monomer and an oxidation agent.

Elyashevich and coworkers described application of a colloid polyaniline solution in poly(vinyl alcohol) to a polyethylene filtration membrane (Elyashevich, G.K. et al., Combined polyethylene-polyaniline membranes. Journal of Applied Polymer Science, 1997, 64(13): p. 2665-2666).

N. Gospdinova et al., French Patent Application 08/01390 (Method of preparing polyaniline films and the highly self-oriented films obtained) submitted on 13 March 2008 and the international PCT application PCT/FR2009/000269 of 13 March 2009 derived therefrom described the preparation of crystalline polyaniline films in the presence of formic acid and Li, Na, K and Ca ions in halide salts. Thus a crystalline highly porous structure of polyaniline on a support was formed. The films were prepared for the purpose of forming conductive or semi conductive layers.

A great amount of articles describe studies of properties of conductive polymers (for example, Stejskal J. et al., In-situ polymerized polyaniline films, Synthetic Metals, 1999, 105: p. 195-202) and compare properties of polyaniline in the form of powder or film applied to a glass support. In the course of polymerization at pH<1, all the monomer is protonated. The authors assume that the oligomeric cation radicals get on the substrate surface, where precipitate as solid phase insoluble in polymerization mixture.

Previous methods of preparation of gas-separation layers from conductive polymers on substrate as given in literature described the method of application of a conjugated polymer from solution or dispersion to porous supports. Using the method no formation of a perfect separation layer from a conjugated polymer or covering of mainly large pores of the support. Thus the excellent separation properties of conjugated polymers cannot be fully utilized. The drawback is eliminated by the preparation of gas-separation layer from conjugated polymers on a compact support. The so-far described methods of preparation of separation layer from conjugated polymers on compact supports do not make it possible to prepare a defect-free very thin separation layer from conjugated polymers with high gas fluxes while retaining high separation coefficients. The reason is the fact that polymerization products are applied onto support. The products are conductive polymer chains which are deposited randomly having no good adhesion to support. The separation layer is rather thick, with a great amount of defects.

As a consequence, both the separation effectivity and permeance of the composite membrane are low. Application of separation layer from monomer vapour leads to absorption of monomer by support where, by the action of oxidation agent, the conductive polymer chains grow inside the whole support. As a consequence, in the course of time, the structure of support and hence the stability of the whole membrane is disrupted. In the case of the polymerizations on the phase boundary polymerization so far described, the products of oxidation of monomers (oligomers) formed by mixing the monomer with the oxidation agent are already applied to support. Using this method of preparation of the separation layer from conductive polymers, a less ordered chain structure and a great amount of defects are formed. This leads to worse separation effectivity. Self-supporting membranes from conductive polymers are mostly prepared in a complex and costly way. Although the membranes show very interesting separation coefficients, due to their great thickness they have low gas permeabilities. A further limiting factor for their commercial utilization is their poor mechanical properties.

Czechoslovak patent CS 275 325 describes a composite polymer membrane comprising a support based on poly(2,6-dimethyl-1 ,4-phenylene oxide), polymeric selective layer based on polyimide and optionally a transition layer. The membrane is prepared by applying a polymer solution on a support saturated with an inert liquid. This method does not permit the preparation of very thin and also homogeneous defect-free films.

The so far described methods of preparation of membranes for gas separation, where an effort is put to utilize good separation properties of conjugated polymers, do not make it possible to prepare composite membranes with a very thin and defect-free separation layer of conjugated polymers connected to support permeable to gases. This drawback is eliminated in the composite membrane according to the present invention where, when applying the separation layer to the support, the polymer molecules of support and those of conductive polymer interpenetrate, which leads to good adhesion of both layers, to the formation of ordered and a very thin separation layer with small amounts of defects and hence to high separation efficiency at relatively high gas fluxes through the membrane.

Disclosure of the Invention

The present invention relates to composite membranes for separation of gas mixtures, with a separation layer of conjugated polymers, consisting of a compact, porous or asymmetric support **S** composed of at least one polymeric material, a separation layer **CP** formed by conjugated polymers and their derivatives, and a transition layer comprising conjugated polymer molecules interpenetrated into the surface layers of the support.

The subject of the present invention is a method of preparation of composite membranes which consists in that in the first phase of preparation of the surface of the support **S** is treated with a monomer (or monomer mixture) solution whereby the monomer molecules diffuse into the surface layers of the support. In the second phase the thus adsorbed monomer molecules are treated with an oxidation agent initiating the formation of polymer chains yielding a dense molecular layer of the conjugated polymer. Thus good adhesion of the conjugated polymer layer to the support **S,** with high orderliness of the chains and a small amount of defects, at a small thickness of the **CP** layer are achieved. In the third phase the unreacted reaction components are removed by washing out.

The method of preparation of composite membrane according to the invention is also characterized by application of the monomer on the surface of the support **S** in water-soluble form formed in acidified aqueous solution in which the monomer is partially protonated and partially in its neutral form.

Another aspect of the method of preparation of composite membranes according to the invention is that between the application of monomer solution and the start of the second step of preparation by adding oxidation agent is a time delay of 0.1 min to 24 h, preferably 1 to 10 min.

The method of preparation of composite membrane according to the invention is further characterized in that the oxidation agent can be ammonium peroxodisulfate, iron(III), cerium(IV), silver nitrate, benzoquinone, preferably ammonium peroxodisulfate.

An aspect of the method of preparation of the composite membrane is the monomer/oxidation agent ratio ranging from 0.2 to 10.0, preferably the stoichiometric ratio.

The composite membranes (**S/CP**) according to the invention exhibit high gas fluxes while maintaining long-term high separation effectivity. The material of the support **S** of the composite membrane (**S/CP**) is selected so that it can fulfil the following requirements:

Film-forming properties;
Dimension stability and long-term chemical and thermal stability under application conditions;
High gas permeability so that the resistance to passing gas is as small as possible, and high adhesion to separation layer **CP** of the conjugated polymer.

The support **S** can be prepared by casting from polymer solution, phase inversion, press extrusion or other common polymer processing technologies.

The composite membranes for gas separation according to the present invention are formed by at least one layer **S** providing mechanical stability to the membranes and serving as a bearing support for at least one linked **CP** layer, which ensures separation properties and consists of a continuous monomolecular layer of conjugated polymers prepared by *in-situ* polymerization of monomers on the support **S.** In the course of the monomer polymerization, an interpenetrating layer consisting of macromolecules of the support **S** and those of the separation layer **CP** is formed. The interpenetrating layer provides high stability of connection of **S** and **CP** layers.

An aspect of the composite membranes according to the invention is the fact that the material of the support **S** that is in contact with the separation layer **CP** is, in particular, a mechanically and chemically stable, film-forming and hydrophobic material with a large free volume, high gas permeability and formed by a single polymer or a combination of more polymers.

The material of the support **S** in the composite membranes according to the invention is poly(2,6-dimethyl-1,4-phenylene oxide) or poly(4-methylpent-1-ene). An aspect of the composite membranes according to the present invention is that the surface of the support **S** can be chemically or physically modified before the application of the **CP** layer, for example by silanization, by plasma treatment or by surface oxidation.

The support **S** of the composite membrane according to the present invention can be compact, porous or asymmetric, in the form of flat sheets, hollow fibres or other membrane configurations, monolayer or multilayered.

The material of the separation layer **CP** comprises a conjugated polymer formed by polymerization of aniline, pyrrole, thiophene, 2,3- or 3,4-(ethylenedioxy)thiophene, 2-alkylaniline, where alkyl is $C_nH_{2n+1}$ and n=1-6, the thickness of the separation layer **CP** of a conjugated polymer not exceeding 1 $\mu$m.

The material of the separation layer **CP** of the composite membranes according to the invention preferably comprises homopolymers or copolymers of aniline or pyrrole.

An aspect of the composite membranes according to the invention is that the separation layer **CP** can be modified chemically, electrochemically or by reduction with noble metals on the surface of the **CP** layer. These optional modifications include alkylation of the amine and imine groups, chemical and electrochemical oxidation and reduction and associated therewith deposition of noble metals on the surface layer **CP.**

The composite membranes according to the invention are further characterized by the fact that the separation layer **CP** can be provided with a protecting gas-permeable layer of polymers with a large free volume such as poly(dimethylsiloxane), which does not resist to passing gases but protects the separation layer against mechanical damage.

A person skilled in the preparation of membranes can deduce that some properties of the bearing support such as dimensional stability and tensile strength can be also achieved by supplementing the membrane made of the above material by inserting a reinforcing fabric or another form of reinforcement. Also high gas permeability can be achieved by using either a highly permeable material in homogenous membrane or a porous membrane with symmetric or asymmetric structure. These different technical variants of the form and structure of the bearing support are foreseeable by a person skilled in the field and are in accord with the present invention.

The **CP** separation layer is formed by the materials which show the following properties:

A high separation coefficient for the selected gas pair;
Ability to form a very thin defect-free separation layer on the corresponding supports **S;**
Good adhesion to support **S;**
A long-term mechanical, chemical and thermal stability;

Materials suitable for the separation layer **CP** are polymers selected from the group of conjugated polymers of polyaniline (PANI) or polypyrrole (PPy) and their derivatives. As a consequence of the high degree of conjugation, these polymers may also show electric conductivity. This is why they are referred to in literature as "conductive or semi-conductive" polymers. From the viewpoint of definition of the invention, the terms "highly conjugated polymers" and "conductive or semi-conductive polymers" are equivalent.

Conjugated polymers of the PANI or PPy type exist in two stable forms: as a conductive salt and a nonconductive base. These two forms, protonated and unprotonated, can be continuously transformed to each other, which enables changes in their structure and thus in separation properties of the material. The molecular size of the acid used in the preparation of the salt can substantially affect the transport properties of the conjugated polymer. Therefore, every salt of the conjugated polymer can be considered as an independent polymer with specific properties. The preparation of various types of salts is very simple and inexpensive, much easier and cheaper than the preparation of new polymer types.

The preparation of a composite membrane for gas separation prepared by the application of the separation layer **CP** from the conjugated polymer onto the support **S** is based on the fact that low-molecular-weight substances such as monomers pyrrole and aniline are able to penetrate into common polymers, *i.e.* they behave like solvents and can swell the polymers. We have found out that the ability of the mentioned monomers to penetrate into surface layers of polymers can preferably be utilized in preparation of composite membranes for gas separation, formed by at least one layer **S** ensuring mechanical stability of the membrane and serving as a bearing support for at least one connected **CP** layer ensuring separation properties of the membrane. Using the procedure according to the invention the separation layer **CP** on the support **S** can be formed as a continuous monomolecular layer of conjugated polymers so that the layer is prepared by *in situ* polymerization of the respective monomers on the support **S.** In the course of the monomer polymerization, an interpenetrating layer of the support **S** and the separation layer **CP** polymers is formed on the interphase, ensuring high stability of links between **S** and **CP** layers. This interpenetrating layer of macromolecules of the support **S** and the separation layer **CP** is a characteristic feature of the composite membranes according to the present invention.

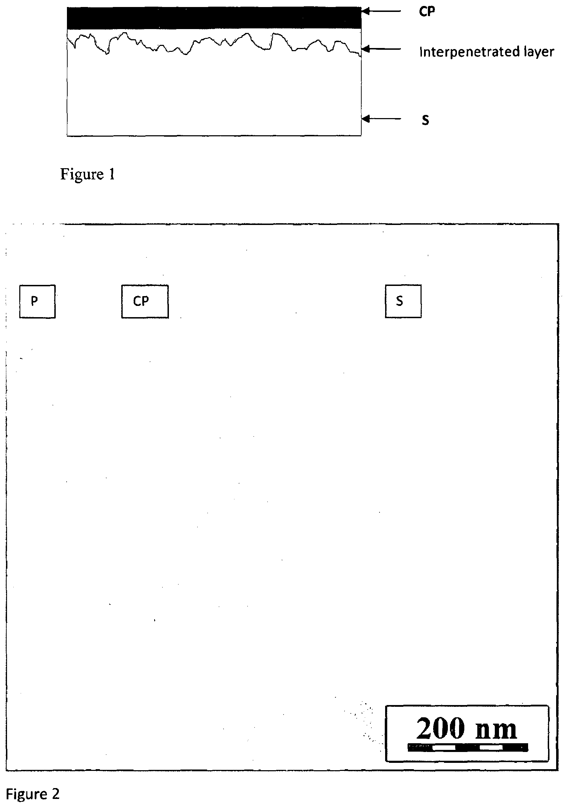

A characteristic feature of the composite membranes according to the invention is the presence of a transition layer of interpenetrating chains of the polymer in the support **S** and the polymer chains forming the separation layer **CP.** The presence of the interpenetrating transition layer as schematically shown in Fig 1 can be proved, *e.g.,* by transmission electron microscopy of a cross-section through the membrane as illustrated by Fig. 2 where the dark zone of the separation layer formed by the conjugated polymer at the interphase with the medium of epoxy resin (on the left) gradually weakens as the conjugated polymer molecules penetrate between those of the support **S** (on the right).

A characteristic feature of the method of preparation of the composite membranes according to the invention is the fact that the support **S** is first exposed to the action of a solution of the monomer (monomers) under the conditions that enable adhesion of the monomer to the material of the support **S** and diffusion of the monomer(s) into pores in the support **S** or into the surface layer of the support **S.** The exposure of the support **S** to the action of the monomer solution does not lead to penetration of the monomer into the bulk of the bearing support as this may occur when exposing the bearing support to monomer vapour. The procedure according to the invention is performed in such a way that the monomer penetrates only into the surface layer of the material forming the support **S.**

Another characteristic feature of the method of preparation of the composite membranes according to the invention is the fact that the monomer polymerization starts by initiation only after the monomer has been adsorbed in sufficient amounts on all accessible surfaces of the support **S** and after its penetration into surface layers of the material of the support **S.**

The individual steps of the preparation of the composite membranes **S/CP** according to the invention are described in detail and accounted for in the following text.

The monomer, such as aniline, pyrrole and their derivatives, is dissolved in an aqueous solution of an inorganic or organic acid in such a way that it forms an equilibrium mixture where a part of the monomer is protonated by the acid and a part remains neutral, *i.e.* unprotonated. The above aqueous solution containing an equilibrium mixture of the monomer is transferred onto the surface of the support **S.**

After a period of time selected in dependence on the polymerization of the **CP** layer, usually 0.1 min - 24 h, preferably 1-10 min, an aqueous solution of oxidation agent is added. Thus monomer oxidation is initiated, a thin layer of oligomers is formed on the support, in a surface layer of the support material and oligomers are also formed in solution. Polymer propagation proceeds then on the oligomer chains. The monomer/oxidation agent ratio can be varied from 0.2 to 10.0; preferably the ratio corresponding to the stoichiometric one can be used.

The surface of the support **S** can be hydrophobic or polar; hydrophobic surfaces are especially advantageous.

In the case of a hydrophobic support, neutral monomer in equilibrium mixture immediately reacts, due to hydrophobic interactions with the hydrophobic surface of the support **S,** partly penetrate into the surface layers of the support and thus form a monolithic nanolayer, which shows a high adhesion to the support **S.** After addition of the oxidation agent, polymer centers are formed both in the surface layer of support **S** and in solution. The chains grow from the polymer centers on the support surface **S and** thus a highly ordered compact monomolecular polymer layer **CP** results. The polymer layer **CP** is almost defect-free even at a small thickness.

In the case of polar surface of the support **S,** the sufficiently strong adsorption of the monomer on the support surface is not ensured and penetration of the monomer into the support does not occur to a high extent. In the initiation of the polymerization by adding an oxidation agent, penetration of the monomer into polymer layers of support does not occur to an appreciable extent. In the initiation of the polymerization by the addition of an oxidation agent, formation of separated hydrophobic dimers, trimers and other oligomers in solution occurs to a greater extent. They form aggregates from which polymer chains grow in all directions. For steric reasons the chains cannot penetrate into all pores and surface layers of the material of the support **S.** The thus prepared separation layer **CP** is characterized by poor adhesion, less ordered structure and a greater amount of defects.

The thickness of the separation layer **CP** can be controlled by the choice of the monomer, temperature, polymerization time and relaxation and by the choice of the oxidation agent as the initiator and by inhibitors and other additives. The monomer concentration depends on the choice of the monomer and on the properties of the solution. It is chosen so that the optimum ratio of the amount of unprotonated monomer (which is adsorbed on the surface and in surface layers of the support **S**) and the amount of protonated monomer in solution is retained. The appropriate concentration ranges from 0.05M to 1M, preferably from 0.1 to 0.3M. The temperature can be selected between -5 and 40 °C, preferably between 15 and 25 °C. The polymerization time depends on polymerization conditions, monomer concentration and temperature. It is selected within the range 1 min - 24 h, preferably 10 min - 3 h.

The oxidation agents for the initiation of the polymerization are preferably selected from the group comprising ammonium peroxodisulfate, Fe(III), Ce(IV), $AgNO_3$ and benzoquinone; preferably ammonium peroxodisulfate can be used.

The nature of the separation layer **CP** can be modified by transformation to base, by reprotonation with acids, by polymer reactions and/or by reduction with noble metals salts on the surface of the **CP** layer.

An advantage of the polymers that are used to form the separation layer **CP** is their high degree of conjugation, which leads to a compact structure of polymer chains with low mobility and low free volume and hence with high selectivity. A characteristic feature of the procedure according to the invention is the formation of the separation layer from these polymers by direct *in situ* polymerization of monomers adsorbed from the solution on the support resulting in an interpenetrated layer of macromolecules of the support and the conjugated polymer. In this way a very thin separation layer having the thicknesses of the order of tens to hundreds of nanometers, linked to the support on molecular level. The thickness and morphology of the separation layer **CP** can be varied in dependence on the time and conditions of the polymerization. The morphology of the separation layer can be affected by deprotonation or protonation with acids and thus can vary and improve its transport and separation properties. Another advantage of these polymers is their low price.

The above procedure for the preparation of the composite membranes according to the present invention led to an unexpectedly good adhesion of the separation layer **CP** to the support **S,** an unexpectedly low amount of defects in the separation layer **CP** and to an unexpectedly high ideal separation factors for selected gas pairs at a very small thickness of the separation layer **CP** (of the order of tens to hundreds of nanometers) and hence to high gas fluxes through the composite membranes. Also surprising is the long-term stability of the composite membranes (**S/CP**) while retaining their separation properties.

Using the above procedure, the composite membranes (**S/CP**) can be prepared with a very thin compact separation layer **CP** from conjugated polymers with outstanding adhesion to the support **S,** which guarantees high gas fluxes at high separation coefficients for selected gas pairs. None of the previously known procedures affords composite membranes for gas separation characterized by such good adhesion of the **CP** and **S** layers by organized compact ordering of polymer chains in the **CP** layer, by a minimum amount of defects in **CP** layer and thus also by high gas fluxes through the composite membrane at high separation effectivity like the composite membranes prepared according to the invention.

Measurement of transport properties of the composite membranes:

Transport properties of the composite membranes were measured on a high-vacuum laboratory device with a static permeation cell. After reaching high vacuum in the device, the measured gas was injected under constant pressure $p_i$ into the cell. Permeability $P$ was determined from the pressure increase $\Delta p_p$ in the calibrated volume $V_p$ of the product part of the cell in the time interval $\Delta t$ according to the formula

$$P = \frac{\Delta p_p}{\Delta t} \cdot \frac{V_P}{A \cdot p_i} \cdot \frac{1}{RT} \qquad (1)$$

where $l$ is membrane thickness, $A$ is membrane area, $R$ is gas constant, $T$ is temperature. For expressing the transport properties of the composite membranes, permeance is used rather than permeability (which is a material property).

Permeance is defined as $\frac{P}{l}$. The permeability coefficient is expressed in barrer units [1 barrer = $10^{-10}$ cm$^3$ (STP).cm/(cm$^2$.s.cmHg)) or in SI units mol.m/(m$^2$.Pa.s)]. Permeance is expressed in units mol/(m$^2$ s Pa). The accuracy of the measurement is better than 3.1 % as can be derived from Equation 1. The relative deviation $\Delta p_p/\Delta t$ is smaller than 0.3 % (determined by the precision of pressure sensor). The relative deviation of area and thickness measurements is smaller than 1 %. The relative accuracy of calibrated volume measurement is 0.5 % and the relative deviation of $p_i$ is 0.3 %. Transport properties were studied for nitrogen, oxygen, hydrogen, methane and carbon dioxide. The purity of gases was higher than 99.95 %. The thickness of the composite membrane was measured with a digital micrometer Mitutoyo.

Brief Description of Figures

Figure 1 - Schematic cross-section of a composite membrane prepared according to the invention
Figure 2 - TEM image of a fracture area of a composite membrane consisting of support **S** made of poly(2,6-dimethyl-1,4-phenylene oxide) and separation layer **CP** based on polyaniline. An ultrathin cut for TEM imaging was prepared from a membrane encapsulated in epoxy resin **P.**

Examples of carrying out the Invention

The invention is illustrated by the following examples which should not be construed as limiting. For support, poly(2,6-dimethyl-1,4-phenylene oxide) (PPO) was chosen as a representative of aromatic polymers and poly(4-methylpent-1-ene) (PMP) as a representative of aliphatic polymers. Separation layers were made of conjugated polymers - polyaniline and polypyrrole, unprotonated or protonated with acids.

Example 1

Preparation of a composite membrane according to the invention consisting of a poly(2,6-dimethyl-1,4-phenylene oxide) support and a separation layer based on polyaniline salt and applied from polymerization mixture

(a) Preparation of poly(2,6-dimethyl-1,4-phenylene oxide) (PPO) support

The support **S** was prepared by commonly used methods of preparation of polymer membranes (films) by casting from 0.5-2 % chloroform solution of poly(2,6-dimethyl-1,4-phenylene oxide) on a degreased glass support and evaporation of the solvent at 30°C. The support was covered with a Petri dish to reduce the evaporation rate of the solvent and to avoid access of dust. Before the measurement of transport properties the membrane was evacuated for several hours. The resulting membrane thicknesses ranged between 8 and 20 μm. The transport properties of poly(2,6-

dimethyl-1,4-phenylene oxide) support are shown in Table 2 (membrane 1).

(b) Preparation of a composite membrane consisting of poly(2,6-dimethyl-1,4-phenylene oxide) (PPO) support and separation layer of polyaniline salt deposited from a polymerization mixture

Polymerization mixture prepared by mixing aqueous monomer solution in hydrochloric acid of concentration 0.2 mol/l and aqueous solution of ammonium peroxodisulfate of concentration 0.25 mol/l was transferred onto poly (2,6-dimethyl-1,4-phenylene oxide) support **S** prepared according to the procedure described in Example 1, item a). The prepared composite membrane was washed with demineralized water, dried at room temperature and evacuated for several hours before the measurement of transport properties was performed. Transport properties of the thus prepared composite membrane are shown in Table 2 (membrane 2).

(c) Preparation of a composite membrane according to the invention consisting of poly

(2,6 dimethyl-1,4-phenylene oxide) support and separation layer of polyaniline salt An aqueous solution of the monomer in hydrochloric acid of concentration 0.2 mol/l was first transferred onto poly(2,6-dimethyl-1,4-phenylene oxide) support **S** prepared by the procedure of Example 1, item a). After a 5-min delay, when adsorption of the unprotonated monomer on the surface layer of the support occurred, an aqueous solution of ammonium peroxodisulfate of concentration 0.25 mol/l was added. After polymerization, the prepared composite membrane (**S/CP**) was washed with demineralized water and dried at laboratory temperature. Before the measurement of transport properties the membrane was placed in vacuum for several hours. Transport properties of the thus prepared composite membrane are shown in Table 2 (membrane 3).

Table 2 Transport and separation properties of PPO support (membrane 1), composite membrane consisting of PPO support and separation layer from polyaniline salt applied from polymerization mixture (membrane 2) and composite membrane prepared according to the invention consisting of PPO support and separation layer from polyaniline salt

Membrane thickness $15.9 \pm 0.8$ μm

| Membrane | Permeance $\times 10^{11}$ mol/(m$^2$ s Pa) | | | | | Separation coefficient* | | | | |
|---|---|---|---|---|---|---|---|---|---|---|
| | $CH_4$ | $N_2$ | $O_2$ | $CO_2$ | $H_2$ | $O_2/N_2$ | $H_2/N_2$ | $H_2/CH_4$ | $H_2/CO_2$ | $CO_2/CH_4$ |
| 1 | 9.07 | 7.26 | 34.39 | 169 | 266 | 4.73 | 36.6 | 29.3 | 6.57 | 1.57 |
| 2 | 0.0219 | 0.0255 | 0.172 | 0.746 | 16.1 | 6.74 | 631 | 735 | 5.77 | 21.6 |
| 3 | 0.0179 | 0.0246 | 0.277 | 0.913 | 20.6 | 11.26 | 837 | 1151 | 22.56 | 51 |

* An ideal separation coefficient – the ratio of permeabilities of neat gases

For composite membranes with separation layers from polyaniline salt on poly(2,6-dimethyl-1,4-phenylene oxide) support prepared according to the invention, higher separation coefficients were obtained for selected gas pairs at the same or higher gas fluxes through the membrane than with the same type of composite membrane prepared from polymerization mixture (see Table 2). In the composite membrane prepared according to the invention interpenetration of macromolecules of support and conjugated polymer occurred, which led to good adhesion of support and separation layer. The separation layer from conjugated polymer was very thin (up to 150 nm), with minimum amounts of defects. The thickness of the separation layer from conjugated polymers and its penetration into surface layers of the support was proved by transmission electron microscopy (TEM; see Fig. 2) and confirmed by atomic force microscopy (AFM).

By analysis of the surface of the separation layer **CP** using scanning electron microscopy (SEM) it was determined that the area of defects in **CP** layer, which may reach as far as support **S,** makes less than 0.01 % of the total membrane area. All the found defects were smaller than 70 nm. Due to the fact that a compact layer of support **S** is under the separation layer **CP,** the defects have no significant effect on transport and separation properties of the composite membrane.

Example 2

Preparation of a composite membrane according to the invention consisting of poly(2,6-dimethyl-1,4-phenylene oxide) support and separation layer of polyaniline base

Aqueous solution of the monomer in hydrochloric acid of concentration 0.2 mol/l was first transferred onto poly(2,6-dimethyl-1,4-phenylene oxide) support **S** prepared by the procedure of Example 1, item a). After a 5-min delay, when adsorption of the unprotonated monomer on the surface layer of the support occurred, an aqueous solution of ammonium peroxodisulfate of the concentration 0.25 mol/l was added. After polymerization, the prepared composite membrane (**S/CP**) was washed with demineralized water and submerged, for 24 h, into an aqueous $NH_3$ solution of the concentration 1 mol/l. Then the membrane was taken out from the aqueous $NH_3$, washed with demineralized water and dried at laboratory temperature. Before the measurement of transport properties, the membrane was placed in vacuum for several hours. Transport properties of the composite membranes with the polyaniline base separation layer on PPO were measured with four samples prepared by the same procedure. The prepared composite membranes had different support thicknesses (see Table 3).

Table 3 Transport properties of composite membranes prepared according to the invention, consisting of poly(2,6-dimethyl-1,4-phenylene oxide) support and separation layer of polyaniline base

| Thickness | Permeance x10$^{11}$ mol/(m$^2$ s Pa) | | | | | Separation coefficient | | | | |
|---|---|---|---|---|---|---|---|---|---|---|
| μm | $CH_4$ | $N_2$ | $O_2$ | $CO_2$ | $H_2$ | $O_2/N_2$ | $H_2/N_2$ | $H_2/CH_4$ | $H_2/CO_2$ | $CO_2/CH_4$ |
| 18 | 1.028 | 1.294 | 9.483 | 37.02 | 134.3 | 7.33 | 104 | 131 | 3.63 | 36 |
| 15.2 | 1.044 | 1.524 | 11.18 | 42.8 | 151 | 7.34 | 99 | 145 | 3.53 | 41 |
| 13.4 | 1.188 | 2.022 | 14.83 | 61.81 | 180.4 | 7.34 | 89.2 | 124 | 2.92 | 52 |
| 10 | 2.03 | 2.798 | 22.29 | 73.4 | 138 | 7.97 | 107 | 131 | 4.07 | 36.2 |

Example 3

Preparation of composite membrane according to the invention consisting of poly(2,6-dimethyl-1,4-phenylene oxide) support and separation layer of polyaniline base protonated with aqueous HCl of the concentration 0.2 mol/l

Aqueous solution of the monomer in hydrochloric acid of the concentration 0.2 mol/l was first transferred onto poly(2,6-dimethyl-1,4-phenylene oxide) support **S** prepared by the procedure of Example 1, item a). After a 5-min delay, when adsorption of the unprotonated monomer on the surface layer of the support occurred, an aqueous solution of ammonium peroxodisulfate of the concentration 0.25 mol/l was added. After polymerization, the prepared composite membrane (**S/CP**) was washed with demineralized water and submerged, for 24 h, into aqueous $NH_3$ solution of concentration 1 mol/l. Then the membrane was removed from the aqueous $NH_3$, washed with demineralized water and submerged, for 24 h, into aqueous solution of HCl of the concentration 0.2 mol/l. Then the membrane was removed from HCl solution and dried at laboratory temperature. Before the measurement of transport properties, the membrane was placed in vacuum for several hours. The transport properties of the composite membranes consisting of PPO support and separation layer of polyaniline base reprotonated with HCl were measured with four samples prepared by the same procedure as above. The prepared composite membranes had different support thicknesses (see Table 4).

Table 4 Transport properties of composite membranes prepared according to the invention, consisting of poly(2,6-dimethyl-1,4-phenylene oxide) support and separation layer of polyaniline base reprotonated with HCl solution of concentration 0.2 mol/l.

| Thickness | Permeance x10$^{11}$ mol/(m$^2$ s Pa) | | | | | Separation coefficient | | | | |
|---|---|---|---|---|---|---|---|---|---|---|
| μm | $CH_4$ | $N_2$ | $O_2$ | $CO_2$ | $H_2$ | $O_2/N_2$ | $H_2/N_2$ | $H_2/CH_4$ | $H_2/CO_2$ | $CO_2/CH_4$ |
| 18 | 0.190 | 0.369 | 4.10 | 16.4 | 100 | 11.11 | 271 | 526 | 6.1 | 86.3 |

(continued)

| Thickness | Permeance x10$^{11}$ mol/(m$^2$ s Pa) | | | | | Separation coefficient | | | | |
|---|---|---|---|---|---|---|---|---|---|---|
| μm | CH$_4$ | N$_2$ | O$_2$ | CO$_2$ | H$_2$ | O$_2$/N$_2$ | H$_2$/N$_2$ | H$_2$/CH$_4$ | H$_2$/CO$_2$ | CO$_2$/CH$_4$ |
| 17 | 0.254 | 0.488 | 5.21 | 20.1 | 132 | 10.67 | 270 | 520 | 6.57 | 79.1 |
| 13 | 0.132 | 0.266 | 3.53 | 14.65 | 128 | 13.27 | 481 | 970 | 8.74 | 111 |
| 10 | 0.249 | 0.464 | 5.41 | 24 | 138 | 11.65 | 297 | 554 | 5.75 | 96.4 |

Example 4

Preparation of a composite membrane according to the invention, consisting of poly(2,6-dimethyl-1,4-phenylene oxide) support and separation layer of polypyrrole salt

Aqueous solution of the monomer in hydrochloric acid of the concentration 0.2 mol/l was first transferred onto poly(2,6-dimethyl-1,4-phenylene oxide) support **S** prepared by the procedure of Example 1, item a). After a 5-min delay, when adsorption of the unprotonated monomer on the surface layer of the support occurred, aqueous solution of ammonium peroxodisulfate of the concentration 0.25 mol/l was added. After polymerization, the prepared composite membrane (**S/CP**) was washed with demineralized water and dried at laboratory temperature. Before measurement of transport properties, the membrane was placed in vacuum for several hours. Transport properties of the composite membranes with the separation layer of polypyrrole salt on PPO were measured with four samples prepared by the same procedure as above. The prepared composite membranes had different support thicknesses (see Table 5).

Table 1 Transport properties of composite membranes prepared according to the invention, consisting of poly(2,6-dimethyl-1,4-phenylene oxide) support and separation layer of polypyrrole salt

| Thickness | Permeance x10$^{11}$ mol/(m$^2$ s Pa) | | | | | Separation coefficient | | | | |
|---|---|---|---|---|---|---|---|---|---|---|
| μm | CH$_4$ | N$_2$ | O$_2$ | CO$_2$ | H$_2$ | O$_2$/N$_2$ | H$_2$/N$_2$ | H$_2$/CH$_4$ | H$_2$/CO$_2$ | CO$_2$/CH$_4$ |
| 19 | 0.264 | 0.526 | 6.03 | 25.6 | 127 | 11.46 | 241 | 481 | 4.96 | 97 |
| 16.2 | 0.283 | 0.558 | 6.45 | 28.1 | 146 | 11.56 | 262 | 516 | 5.20 | 99.3 |
| 13.6 | 0.347 | 0.747 | 8.68 | 36.7 | 202 | 11.62 | 270 | 582 | 5.50 | 105.8 |
| 12 | 0.232 | 0.511 | 5.64 | 25.7 | 171 | 10.24 | 335 | 737 | 6.65 | 110.8 |

Example 5

Preparation of a composite membrane according to the invention, consisting of poly(2,6-dimethyl-1,4-phenylene oxide) support and separation layer of polypyrrole base

Aqueous solution of the monomer in hydrochloric acid of the concentration 0.2 mol/l was first transferred onto poly(2,6-dimethyl-1,4-phenylene oxide) support **S** prepared by the procedure of Example 1, point a). After a 5-min delay, when adsorption of the unprotonated monomer on the surface layer of the support occurred, aqueous solution of ammonium peroxodisulfate of the concentration 0.25 mol/l was added. After the polymerization, the prepared composite membrane (**S/CP**) was washed with demineralized water and submerged, for 24 h, into aqueous NH$_3$ solution of the concentration 1 mol/l. Then the membrane was washed with demineralized water and dried at laboratory temperature. Before measurement of transport properties, the membrane was placed in vacuum for several hours. Transport properties of the composite membranes with the separation layer of polypyrrole base on PPO support were measured with four samples prepared by the same procedure as above. The prepared composite membranes had different support thicknesses (see Table 6).

Table 6 Transport properties of composite membranes prepared according to the invention, consisting of poly(2,6-dimethyl-1,4-phenylene oxide) support and separation layer of polypyrrole base

| Thickness | Permeance x10$^{11}$ mol/(m$^2$ s Pa) | | | | | Separation coefficient | | | | |
|---|---|---|---|---|---|---|---|---|---|---|
| μm | CH$_4$ | N$_2$ | O$_2$ | CO$_2$ | H$_2$ | O$_2$/N$_2$ | H$_2$/N$_2$ | H$_2$/CH$_4$ | H$_2$/CO$_2$ | CO$_2$/CH$_4$ |
| 19 | 0.163 | 0.413 | 4.59 | 18.4 | 140 | 11.11 | 339 | 859 | 7.61 | 113 |
| 15.9 | 0.175 | 0.493 | 5.49 | 21.1 | 141 | 11.14 | 286 | 806 | 6.68 | 121 |

(continued)

| Thickness | Permeance x10$^{11}$ mol/(m$^2$ s Pa) | | | | | Separation coefficient | | | | |
|---|---|---|---|---|---|---|---|---|---|---|
| μm | CH$_4$ | N$_2$ | O$_2$ | CO$_2$ | H$_2$ | O$_2$/N$_2$ | H$_2$/N$_2$ | H$_2$/CH$_4$ | H$_2$/CO$_2$ | CO$_2$/CH$_4$ |
| 13.6 | 0.192 | 0.603 | 7.07 | 26 | 175 | 11.72 | 290 | 911 | 6.73 | 135 |
| 10.2 | 0.177 | 0.511 | 5.98 | 22.5 | 185 | 11.70 | 362 | 1045 | 8.22 | 127 |

Example 6

Preparation of a composite membrane according to the invention, consisting of poly(2,6-dimethyl-1,4-phenylene oxide) support and separation layer of polypyrrole base reprotonated with aqueous HCl of concentration 0.2 mol/l

Aqueous solution of the monomer in hydrochloric acid of the concentration 0.2 mol/l was first transferred onto poly(2,6-dimethyl-1,4-phenylene oxide) support **S** prepared by the procedure of Example 1, item a). After a 5-min delay, when adsorption of the unprotonated monomer on the surface layer of the support occurred, aqueous solution of ammonium peroxodisulfate of the concentration 0.25 mol/l was added. After the polymerization, the prepared composite membrane (**S/CP**) was washed with demineralized water and submerged, for 24 h, into aqueous NH$_3$ solution of the concentration 1 mol/l. Then the membrane was removed from the aqueous NH$_3$, washed with demineralized water and submerged, for 24 h, into aqueous solution of HCl of the concentration 0.2 mol/l. Then the membrane was removed from the HCl solution and dried at laboratory temperature. Before measurement of transport properties, the membrane was placed in vacuum for several hours. The transport properties of the composite membranes consisting of PPO support and separation layer of polypyrrole base reprotonated with HCl were measured with four samples prepared by the same procedure as above. The prepared composite membranes had different support thicknesses (see Table 7).

Table 7 Transport properties of composite membranes prepared according to the invention, consisting of poly (2,6-dimethyl-1,4-phenylene oxide) support and separation layer of a polypyrrole base protonated with HCl of concentration 0.2 mol/l

| Thickness | Permeance x10$^{11}$ mol/(m$^2$ s Pa) | | | | | Separation coefficient | | | | |
|---|---|---|---|---|---|---|---|---|---|---|
| μm | CH$_4$ | N$_2$ | O$_2$ | CO$_2$ | H$_2$ | O$_2$/N$_2$ | H$_2$/N$_2$ | H$_2$/CH$_4$ | H$_2$/CO$_2$ | CO$_2$/CH$_4$ |
| 18.6 | 0.434 | 0.861 | 9.05 | 35 | 161 | 10.51 | 187 | 371 | 4.6 | 80.6 |
| 18 | 0.677 | 1.098 | 10.83 | 53.9 | 137 | 9.86 | 125 | 202 | 2.54 | 79.6 |
| 15.1 | 0.562 | 0.964 | 9.62 | 43.3 | 153 | 9.98 | 159 | 272 | 3.53 | 77 |
| 11.9 | 0.548 | 0.962 | 10.03 | 44.2 | 173 | 10.43 | 180 | 316 | 3.91 | 80.7 |

Example 7

Preparation of a composite membrane according to the invention, consisting of poly(2,6-dimethyl-1,4-phenylene oxide) support and separation layer of polyaniline or polypyrrole base reprotonated with various acids

The separation layer of polyaniline or polypyrrole base can be protonated using various acids. Thus the morphology and the associated separation and transport properties of the separation layer **CP** on the support **S** can be changed.

(a) Preparation of a composite membrane according to the invention, consisting of poly(2,6-dimethyl-1,4-phenylene oxide) support and separation layer of polyaniline or polypyrrole base reprotonated with HBF$_4$ of concentration 1 mol/l

Aqueous solution of the monomer in hydrochloric acid of the concentration 0.2 mol/l was first transferred onto poly(2,6-dimethyl-1,4-phenylene oxide) support **S** prepared by the procedure of Example 1, item a). After a 5-min delay, when adsorption of the unprotonated monomer on the surface layer of the support occurred, aqueous solution of ammonium peroxodisulfate of the concentration 0.25 mol/l was added. After the polymerization, the prepared composite membrane (**S/CP**) was washed with demineralized water and submerged, for 24 h, into aqueous NH$_3$ solution of the concentration 1 mol/l. Then the membrane was removed from the aqueous NH$_3$, washed with demineralized water and submerged, for 24 h, into aqueous solution of HBF$_4$ of the concentration 1 mol/l. Then the membrane was removed from the HBF$_4$ solution and dried at laboratory temperature. Before measurement of transport properties, the membrane was placed in vacuum for several hours. Transport and separation properties of the composite membranes with the separation layer based on polyaniline are shown in Table 8, those based on PPy in Table 9.

(b) Preparation of a composite membrane according to the invention, consisting of poly(2,6-dimethyl-1,4-phenylene oxide) support and separation layer of polyaniline or polypyrrole base reprotonated with $H_2SO_4$ of concentration 0.1 mol/l

Aqueous solution of the monomer in hydrochloric acid of the concentration 0.2 mol/l was first transferred onto poly(2,6-dimethyl-1,4-phenylene oxide) support **S** prepared by the procedure of Example 1, item a). After a 5-min delay, when adsorption of the unprotonated monomer on the surface layer of the support occurred, aqueous solution of ammonium peroxodisulfate of the concentration 0.25 mol/l was added. After polymerization, the prepared composite membrane (**S/CP**) was washed with demineralized water and submerged, for 24 h, into aqueous $NH_3$ solution of the concentration 1 mol/l. Then the membrane was taken out from the aqueous $NH_3$, washed with demineralized water and put into aqueous solution of $H_2SO_4$ of the concentration 0.1 mol/l for 24 h. Then the membrane was removed from the solution and dried at laboratory temperature. Before measurement of transport properties, the membrane was placed in vacuum for several hours. Transport and separation properties of composite membranes with the separation layer based on polyaniline are given in Table 8, those based on PPy in Table 9.

Table 8 Transport properties of composite membranes prepared according to the invention consisting of support **S** of poly (2,6-dimethyl-1,4-phenylene oxide) and separation layer **CP** of polyaniline base reprotonated with $HBF_4$ of concentration 1 mol/l and separation layer **CP** of polyaniline base reprotonated with $H_2SO_4$ of concentration 0.1 mol/l

| Acid | Permeance x10$^{11}$ mol/(m$^2$ s Pa) | | | | | Separation coefficient | | | | |
|---|---|---|---|---|---|---|---|---|---|---|
| | $CH_4$ | $N_2$ | $O_2$ | $CO_2$ | $H_2$ | $O_2/N_2$ | $H_2/N_2$ | $H_2/CH_4$ | $H_2/CO_2$ | $CO_2/CH_4$ |
| $HBF_4$ | 0.482 | 0.951 | 7.62 | 33.4 | 136 | 8.01 | 143 | 281 | 4.1 | 69.3 |
| $H_2SO_4$ | 0.054 | 0.056 | 0.29 | 1.2 | 9.9 | 5.3 | 181 | 186 | 8.25 | 22.56 |

Table 9 Transport properties of composite membranes according to the invention consisting of poly(2,6-dimthyl-1,4-phenylene oxide) support and separation layer **CP** of polypyrrole base reprotonated with $HBF_4$ of concentration 1 mol/l and separation layer **CP** of polypyrrole base reprotonated with $H_2SO_4$ of concentration 0.1 mol/l

| Acid | Permeance x10$^{11}$ mol/(m$^2$ s Pa) | | | | | Separation coefficient | | | | |
|---|---|---|---|---|---|---|---|---|---|---|
| | $CH_4$ | $N_2$ | $O_2$ | $CO_2$ | $H_2$ | $O_2/N_2$ | $H_2/N_2$ | $H_2/CH_4$ | $H_2/CO_2$ | $CO_2/CH_4$ |
| $HBF_4$ | 0.990 | 1.769 | 16.56 | 73.28 | 184 | 9.36 | 104 | 185 | 2.51 | 74 |
| $H_2SO_4$ | 0.004 | 0.002 | 0.029 | 0.134 | 5.11 | 14.56 | 2555 | 1278 | 38.1 | 33.5 |

Example 8

Long-term stability test of composite membranes prepared according to the invention

The test of long-term stability of composite membranes was proceeding for 15-18 months under laboratory conditions when the tested membranes were stored in the dark at laboratory temperature 19-33°C at relative air humidity 12-60 %. Two membranes were tested, consisting of poly(2,6-dimethyl-1,4-phenylene oxide) support and polyaniline separation layer, reprotonated with HCl of concentration 0.2 mol/l, which were prepared as described in Example 3. Transport properties of the composite membranes in dependence on the aging time are shown in Table 10, membranes 4 and 5.

Further, composite membranes consisting of poly(2,6-dimethyl-1,4-phenylene oxide) support and a separation layer of polypyrrole salt, were prepared according to Example 4, that of polypyrrole base according to Example 5 and that of polypyrrole base reprotonated with HCl of concentration of 0.2 mol/l was prepared according to Example 6. Transport and separation properties of the membranes are given in Table 11.

Table 10 Long-term stability tests of composite membranes prepared according to the invention, consisting of poly(2,6-dimethyl-1,4-phenylene oxide) support and separation layer of polyaniline base reprotonated with HCl of concentration 0.2 mol/l

| Membrane | Time | Permeance $\times 10^{11}$ mol/(m$^2$ s Pa) | | | | | Separation coefficient | | | | |
|---|---|---|---|---|---|---|---|---|---|---|---|
| | day | CH$_4$ | N$_2$ | O$_2$ | CO$_2$ | H$_2$ | O$_2$/N$_2$ | H$_2$/N$_2$ | H$_2$/CH$_4$ | H$_2$/CO$_2$ | CO$_2$/CH$_4$ |
| 4 | 0 | 0.254 | 0.488 | 5.21 | 20.1 | 132 | 10.67 | 270 | 520 | 6.57 | 79.1 |
| | 241 | 0.312 | 0.552 | 5.73 | 23.2 | 134 | 10.38 | 242 | 429 | 5.77 | 74.4 |
| | 536 | 0.405 | 0.680 | 6.10 | 28 | 131 | 8.97 | 192 | 323 | 4.67 | 69.1 |
| 5 | 0 | 0.132 | 0.266 | 3.53 | 14.65 | 128 | 13.27 | 481 | 970 | 8.74 | 111 |
| | 208 | 0.122 | 0.268 | 3.42 | 14.15 | 123 | 12.76 | 459 | 1008 | 8.69 | 116 |
| | 452 | 0.112 | 0.278 | 3.36 | 13.83 | 121 | 12.18 | 439 | 1067 | 8.76 | 122 |

Table 11 Test of long-term stability of composite membranes prepared according to the invention, consisting of poly(2,6-dimethyl-1,4-phenylene oxide) support and separation layer of polypyrrole salt, polypyrrole base and polypyrrole base reprotonated with HCl of concentration 0.2 mol/l

| Membrane | Time | Permeance $\times 10^{11}$ mol/(m$^2$ s Pa) | | | | | Separation coefficient | | | | |
|---|---|---|---|---|---|---|---|---|---|---|---|
| | day | CH$_4$ | N$_2$ | O$_2$ | CO$_2$ | H$_2$ | O$_2$/N$_2$ | H$_2$/N$_2$ | H$_2$/CH$_4$ | H$_2$/CO$_2$ | CO$_2$/CH$_4$ |
| PPO+PPy salt | 0 | 0.347 | 0.747 | 8.68 | 36.7 | 202 | 11.62 | 270 | 582 | 5.50 | 106 |
| | 198 | 0.256 | 0.542 | 6.53 | 26.2 | 182 | 12.04 | 336 | 711 | 6.95 | 102 |
| | 427 | 0.112 | 0.364 | 4.41 | 14.7 | 161 | 11.99 | 437 | 1448 | 10.9 | 131 |
| PPO+PPy base | 0 | 0.192 | 0.603 | 7.07 | 26 | 175 | 11.72 | 290 | 911 | 6.73 | 135 |
| | 218 | 0.148 | 0.468 | 6.12 | 20.5 | 163 | 13.07 | 348 | 1101 | 7.95 | 139 |
| | 481 | 0.135 | 0.304 | 5.40 | 17.9 | 147 | 17.76 | 484 | 1089 | 8.21 | 133 |
| PPO+PPy HCl | 0 | 0.434 | 0.861 | 9.05 | 35 | 161 | 10.51 | 187 | 371 | 4.6 | 80.6 |
| | 231 | 0.332 | 0.718 | 7.91 | 31.2 | 155 | 11.02 | 216 | 469 | 4.97 | 94 |
| | 523 | 0.185 | 0.651 | 6.19 | 25 | 140 | 9.50 | 215 | 753 | 5.6 | 135 |

Example 9

Preparation of composite membranes according to the invention consisting of poly(4-methylpent-1-ene) (PMP) support and separation layer based on polyaniline

(a) Preparation of poly(4-methylpent-1-ene) (PMP) support

Poly(4-methylpent-1-ene) (PMP) support was prepared by pressing at 231°C. By this method, supports of the thickness 10-100 $\mu$m were prepared. Transport and separation properties of PMP support of thicknesses 98.4 $\pm$ 2.3 $\mu$m are given in Table 12, membrane 6.

(b) Preparation of a composite membrane according to the invention, consisting of poly(4-methylpent-1-ene) (PMP) support and separation layer of polyaniline salt.

Aqueous solution of the monomer in hydrochloric acid of the concentration 0.2 mol/l was first transferred onto poly(4-methylpent-1-ene) support **S** prepared by the procedure in Example 9, item a). After a 5-min delay, when adsorption of the unprotonated monomer on the surface layer of the support occurred, aqueous solution of ammonium peroxodisulfate of the concentration 0.25 mol/l was added. After polymerization and relaxation, the prepared composite membrane (**S/CP**) was washed with demineralized water and dried at laboratory temperature. Before measurement of transport properties, the membrane was placed in vacuum for several hours. The thickness of the composite membrane was 61.4 $\mu$m. Transport properties of the thus prepared composite membrane are given in Table 12, membrane 7.

(c) Preparation of a composite membrane according to the invention consisting of poly(4-methylpent-1-ene) (PMP) support and separation layer of polyaniline base reprotonated with HCl of concentration 0.2 mol/l

Aqueous solution of the monomer in hydrochloric acid of the concentration 0.2 mol/l was first transferred onto poly(2,6-dimethyl-1,4-phenylene oxide) support **S** prepared by the procedure in Example 9, item a). After a 5-min delay, when adsorption of the unprotonated monomer on the surface layer of the support occurred, aqueous solution of ammonium peroxodisulfate of the concentration 0.25 mol/l was added. After polymerization and relaxation, the prepared composite membrane (**S/CP**) was washed with demineralized water and submerged, for 24 h, into aqueous $NH_3$ solution of the concentration 1 mol/l. Then the membrane was taken out from the aqueous $NH_3$, washed with demineralized water and put into aqueous solution of HCl of the concentration 0.2 mol/l for 24 h. Then the membrane was removed from the solution and dried at laboratory temperature. Before measurement of transport properties, the membrane was placed in vacuum for several hours. The thickness of the composite membrane was 49.8 $\mu$m. Transport properties of the thus prepared composite membrane are given in Table 12, membrane 8.

Table 12 Transport properties of support prepared from PMP - membrane 6, composite membranes prepared according to the invention, consisting of PMP support and separation layer of polyaniline salt - membrane 7 and composite membranes prepared according to the invention, consisting of PMP support and separation layer of polyaniline base reprotonated with HCl of concentration 0.2 mol/l - membrane 8.

| Membrane | Permeance x$10^{11}$ mol/($m^2$ s Pa) | | | | | Separation coefficient | | | | |
|---|---|---|---|---|---|---|---|---|---|---|
| | $CH_4$ | $N_2$ | $O_2$ | $CO_2$ | $H_2$ | $O_2/N_2$ | $H_2/N_2$ | $H_2/CH_4$ | $H_2/CO_2$ | $CO_2/CH_4$ |
| 6 | 4.22 | 1.93 | 8.21 | 24.67 | 37.75 | 4.25 | 19.6 | 8.95 | 1.52 | 5.84 |
| 7 | 0.512 | 0.352 | 2.86 | 10.22 | 45.24 | 8.13 | 128.5 | 88.4 | 4.43 | 20 |
| 8 | 0.587 | 0.429 | 3.44 | 12.64 | 54.70 | 8.02 | 127.5 | 93.2 | 4.33 | 21.5 |

Industrial Applicability

Composite membranes with separation layer of conjugated polymers can be utilized in industry in separation of industrial gas mixtures such as removing acid gases from natural gas and biogas, separation of air oxygen and nitrogen, separation of helium from natural gas, removing carbon dioxide from combustion products and others. The composite membranes can be used as flat compact or asymmetric membranes or in the form of hollow fibres and other membrane configurations. Preparation of the composite membranes with separation layer of conjugated polymer is very simple and inexpensive.

## Claims

1. A method of preparation of a composite membrane for separation of gas mixtures, the membrane consisting of an at least one-layered polymeric support **S**, a separation layer **CP** and a transition layer, wherein the separation layer **CP** consists of continuous monomolecular layer of conjugated polymers, wherein the thickness of the separation layer **CP** of the conjugated polymer does not exceed 1 $\mu$m, measured by atomic force microscopy, and wherein the transition layer is an interpenetrated layer of macromolecules of the support **S** and the separation layer **CP,** the method comprising the following steps: the surface of the polymer support **S,** wherein the material of the support **S** is based on poly(2,6-dimethyl-1,4-phenylene oxide) or poly(4-methylpent-1-ene), is in a first step treated with a solution of monomer or monomer mixture, wherein the monomer is selected from aniline, pyrrole, thiophene, 2,3- or 3,4-(ethylenedioxy)thiophene, 2-alkylaniline, said monomer or monomer mixture being in a water-soluble form in acid aqueous solution, in which the monomer exists in protonated and in unprotonated forms, the monomers being adsorbed on the polymer support and diffusing into surface layers of the support; in a second step, an oxidation agent is added and due to the action of the oxidation agent on the adsorbed monomer, initiation and propagation of polymer chain occur yielding a dense monomolecular layer of conjugated polymer, and through the polymerization, interpenetration of the molecules of the support and the conjugated polymer occurs between the support and the separation layer; in a third step the unreacted reaction components are removed by washing.

2. The method of preparation of the composite membrane according to Claim 1, wherein between the application of the monomer solution and the start of the second step of the preparation by adding the oxidation agent, there is a time delay of 6 seconds to 24 hours, preferably 1 to 10 min.

3. The method of preparation of the composite membrane according to Claim 1, wherein the oxidation agent is selected from the group consisting of ammonium peroxodisulfate, Fe(III), Ce(IV), AgNO$_3$, benzoquinone, preferably ammonium peroxodisulfate.

4. The method of preparation of the composite membrane according to Claim 1, wherein the ratio of the monomer to the oxidation agent ranges between 0.2 and 10.0, preferably the ratio corresponds to the stoichiometric ratio.

5. The method of preparation of the composite membrane according to Claim 1, wherein the surface of the support **S** is chemically or physically modified before the application of the **CP** layer.

6. The method of preparation of the composite membrane according to Claim 1, wherein the support **S** is compact, porous or asymmetric, in the form of flat sheets or hollow fibres, the support being single-layered or multilayered.

7. The method of preparation of the composite membrane according to Claim 1, wherein the material of the separation layer **CP** is based on homopolymers or copolymers of aniline or pyrrole.

8. The method of preparation of the composite membrane according to Claim 1, wherein the separation layer **CP** is modified chemically, electrochemically or by reduction of noble metals on the surface of the separation layer **CP.**

9. The method of preparation of the composite membrane according to Claim 1, wherein the separation layer **CP** is provided with a protective gas-permeable layer.

10. A composite membrane for separation of gas mixtures prepared according to the method of any one of claims 1 to 9.

## Patentansprüche

1. Verfahren zur Herstellung einer Kompositmembran zur Trennung von Gasgemischen, wobei die Membran aus einem mindestens einlagigen polymeren Träger **S,** einer Trennschicht **CP** und einer Übergangs schicht besteht, wobei die Trennschicht **CP** aus einer kontinuierlichen monomolekularen Schicht von konjugierten Polymeren besteht, wobei die Dicke der Trennschicht **CP** des konjugierten Polymers 1 $\mu$m nicht übersteigt, gemessen durch Rasterkraftmikroskopie, und wobei die Übergangsschicht eine interpenetrierte Schicht aus Makromolekülen des Trägers **S** und der Trennschicht **CP** ist, das Verfahren umfassend die folgenden Schritte: die Oberfläche des Polymerträgers **S,** wobei das Material des Trägers **S** auf Poly(2,6-dimethyl-1,4-phenylenoxid) oder Poly(4-methylpent-1-en) basiert, wird in einem ersten Schritt mit einer Lösung von Monomer oder Monomermischung behandelt, wobei das Monomer ausgewählt ist aus Anilin, Pyrrol, Thiophen, 2,3- oder 3,4-(Ethylendioxy)thiophen, 2-Alkylanilin, wobei das Monomer oder Monomergemisch ist in einer wasserlöslichen Form in saurer wässriger Lösung, in der das Monomer in protonierter und in nicht protonierter Form vorliegt, wobei die Monomere auf dem Polymerträger adsorbiert werden und in Oberflächenschichten des Trägers diffundieren; in einem zweiten Schritt wird ein Oxidationsmittel zugegeben, und aufgrund der Wirkung des Oxidationsmittels auf das adsorbierte Monomer tritt die Initiierung und Fortpflanzung der Polymerkette auf, was zu einer dichten monomolekularen Schicht aus konjugiertem Polymer führt, und durch die Polymerisation zu einer gegenseitigen Durchdringung der Moleküle des Trägers und des konjugierten Polymers tritt zwischen dem Träger und der Trennschicht auf; in einem dritten Schritt werden die nicht umgesetzten Reaktionskomponenten durch Waschen entfernt.

2. Verfahren zur Herstellung der Kompositmembran nach Anspruch 1, wobei zwischen dem Aufbringen der Monomerlösung und dem Beginn des zweiten Schrittes der Herstellung durch Zugabe des Oxidationsmittels eine Zeitverzögerung von 6 Sekunden bis 24 Stunden besteht, vorzugsweise 1 bis 10 min.

3. Verfahren zur Herstellung der Kompositmembran nach Anspruch 1, wobei das Oxidationsmittel ausgewählt ist aus der Gruppe bestehend aus Ammoniumperoxodisulfat, Fe(III), Ce(IV), AgNO$_3$, Benzochinon, vorzugsweise Ammoniumperoxodisulfat.

4. Verfahren zur Herstellung der Kompositmembran nach Anspruch 1, wobei das Verhältnis des Monomers zum Oxidationsmittel im Bereich zwischen 0,2 und 10,0 liegt, vorzugsweise entspricht das Verhältnis dem stöchiometrischen Verhältnis.

5. Verfahren zur Herstellung der Kompositmembran nach Anspruch 1, wobei die Oberfläche des Trägers **S** vor dem Aufbringen der Schicht **CP** chemisch oder physikalisch modifiziert wird.

6. Verfahren zur Herstellung der Kompositmembran nach Anspruch 1, wobei der Träger **S** kompakt, porös oder asymmetrisch, in Form von flachen Platten oder Hohlfasern ist, wobei der Träger einlagig oder mehrschichtig ist.

7. Verfahren zur Herstellung der Kompositmembran nach Anspruch 1, wobei das Material der Trennschicht **CP** auf Homopolymeren oder Copolymeren von Anilin oder Pyrrol basiert.

8. Verfahren zur Herstellung der Kompositmembran nach Anspruch 1, wobei die Trennschicht **CP** chemisch, elektrochemisch oder durch Reduktion von Edelmetallen auf der Oberfläche der Trennschicht **CP** modifiziert wird.

9. Verfahren zur Herstellung der Kompositmembran nach Anspruch 1, wobei die Trennschicht **CP** mit einer gasdurchlässigen Schutzschicht versehen ist.

10. Kompositmembran zur Trennung von Gasgemischen, hergestellt nach dem Verfahren nach einem der Ansprüche 1 bis 9.

**Revendications**

1. Procédé de préparation d'une membrane composite pour la séparation de mélanges des gaz, la membrane comprenant un support **S** polymère comprenant au moins une couche, une couche **CP** de séparation et une couche de transition, où la couche **CP** de séparation consiste en une couche monomoléculaire continue de polymères conjugués, dans lesquels l'épaisseur de la couche **CP** de séparation du polymère conjugué ne dépasse pas 1 μm, mesurée par microscopie à force atomique, et où la couche de transition est une couche interpénétrée de macromolécules du support **S** et de la couche **CP** de séparation, le procédé comprenant les étapes suivantes: la surface du support **S** polymère, où le matériau du support **S** est à base de poly(2,6-diméthyl-1,4-phénylène oxyde) ou de poly(4-méthylpent-1-ène), est dans une première étape traitée avec une solution de monomère ou de mélange de monomères, où le monomère est choisi parmi l'aniline, le pyrrole, le thiophène, le 2,3- ou 3,4-(éthylènedioxy)thiophène, la 2-alkylaniline, ledit monomère ou ledit mélange de monomères étant dans une forme soluble dans la solution aqueuse acide dans laquelle le monomère existe sous forme protonée et non-protonée, les monomères étant adsorbés sur le support polymère et diffusés dans les couches superficielles du support; dans une deuxième étape, un agent d'oxydation est ajouté et, sous l'action de l'agent d'oxydation sur le monomère adsorbé, il se produit une amorce et une propagation de la chaîne du polymère donnant une couche monomoléculaire dense de polymère conjugué et, par la polymérisation, une interpénétration des molécules du support et du polymère conjugué se produise entre le support et la couche de séparation; dans une troisième étape, les composants réactionnels n'ayant pas réagi sont éliminés par lavage.

2. Procédé de préparation de la membrane composite selon la revendication 1, dans lequel entre l'application de la solution de monomère et le début de la deuxième étape de la préparation par ajout de l'agent d'oxydation, il existe un délai de 6 secondes à 24 heures. de préférence 1 à 10 min.

3. Procédé de préparation de la membrane composite selon la revendication 1, dans lequel l'agent d'oxydation est choisi dans le groupe constitué par le peroxodisulfate d'ammonium, Fe(III), Ce(IV), $AgNO_3$, la benzoquinone, de préférence le peroxodisulfate d'ammonium.

4. Procédé de préparation de la membrane composite selon la revendication 1, dans lequel le rapport du monomère à l'agent d'oxydation est compris entre 0,2 et 10,0, de préférence le rapport correspond au rapport stoechiométrique.

5. Procédé de préparation de la membrane composite selon la revendication 1, dans lequel la surface du support **S** est modifiée chimiquement ou physiquement avant l'application de la couche **CP.**

6. Procédé de préparation de la membrane composite selon la revendication 1, dans lequel le support **S** est compact, poreux ou asymétrique, sous forme de feuilles planes ou de fibres creuses, le support étant monocouche ou multicouche.

7. Procédé de préparation de la membrane composite selon la revendication 1, dans lequel le matériau de la couche **CP** de séparation est à base d'homopolymères ou de copolymères d'aniline ou de pyrrole.

8. Procédé de préparation de la membrane composite selon la revendication 1, dans lequel la couche **CP** de séparation est modifiée chimiquement, électrochimiquement ou par réduction de métaux nobles à la surface de la couche **CP** de séparation.

9. Procédé de préparation de la membrane composite selon la revendication 1, dans lequel la couche **CP** de séparation est munie d'une couche protectrice perméable aux gaz.

10. Membrane composite pour la séparation de mélanges des gaz préparée selon le procédé de l'une quelconque des revendications 1 à 9.

Figure 1

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5045357 A
- WO 9203217 A
- US 5358556 A
- US 20030162939 A
- US 7563484 B2
- US 20030162939 A1
- US 6465120 B1
- US 5089294 A
- FR 0801390
- FR 2009000269 W
- CS 275325

### Non-patent literature cited in the description

- **ROBESON, L.M.** The upper bound revisited. *Journal of Membrane Science,* 2008, vol. 320, 390-400
- **GUPTA, Y. ; K. HELLGARDT ; R.J. WAKEMAN.** Enhanced permeability of polyaniline based nano-membranes for gas separation. *Journal of Membrane Science,* 2006, vol. 282 (1-2), 60-70
- **ELYASHEVICH, G.K. et al.** The effect of a polypyrrole coating on thermal stability of microporous polyethylene membranes. *European Polymer Journal,* 2003, vol. 39 (4), 647-654
- **ANDREEVA, D.V. et al.** Effect of polymerization conditions of pyrrole on formation, structure and properties of high gas separation thin polypyrrole films. *Thin Solid Films,* 2002, vol. 406 (1-2), 54-63
- **ORLOV, A.V. ; S.G. KISELEVA ; G.P. KARPACHEVA.** Borderline polymerization of aniline: Interpretation in the context of the electrical double layer model. *Polymer Science - Series A,* 2008, vol. 50 (10), 1021-1027
- **ANDERSON, M.R. et al.** Conjugated polymer films for gas separations. *Science,* 1991, vol. 252 (5011), 1412-1415
- **MACDIARMID, A.G. ; A.J. EPSTEIN.** Polyanilines - a Novel Class of Conducting Polymers. *Faraday Discussions,* 1989, vol. 88, 317
- **LEE, Y.M. et al.** Gas separation through conductive polymer membranes. 2. Polyaniline membranes with high oxygen selectivity. *Industrial and Engineering Chemistry Research,* 1999, vol. 38 (5), 1917-1924
- **KUWABATA, S. ; C.R. MARTIN.** Investigation of the gas-transport properties of polyaniline. *Journal of Membrane Science,* 1994, vol. 91 (1-2), 1-12
- **CHANG, M.J. ; A.S. MYERSON ; T.K. KWEI.** Gas transport in ring-substituted polyanilines. *Polymer Engineering and Science,* 1997, vol. 37 (5), 868-875
- **REBATTET, L. et al.** Effect of doping treatment on gas transport properties and on separation factors of polyaniline membranes. *Journal of Applied Polymer Science,* 1995, vol. 57 (13), 1595-1604
- **GUPTA, Y. ; K. HELLGARDT ; R.J. WAKEMAN.** Enhanced permeability of polyaniline-based nanomembranes for gas separation. *Journal of Membrane Science,* 2006, vol. 282 (1-2), 60-70
- **POTASOV, K.V. et al.** Composite sulfonated cation-exchange membranes modified with polyaniline and applied to salt solution concentration by electrodialysis. *Russian Journal of Electrochemistry,* 2010, vol. 46 (10), 1131-40
- **ELYASHEVICH, G.K. et al.** Combined polyethylene-polyaniline membranes. *Journal of Applied Polymer Science,* 1997, vol. 64 (13), 2665-2666
- **STEJSKAL J. et al.** In-situ polymerized polyaniline films. *Synthetic Metals,* 1999, vol. 105, 195-202